# EUROPEAN PATENT SPECIFICATION

(11) **EP 3 118 157 B1**
(45) Date of publication and mention of the grant of the patent: **27.09.2017**
(21) Application number: 16179128.0
(22) Date of filing: 12.07.2016
(51) Int. Cl.: C01B 15/013

(54) **ONE-STAGE METHOD FOR PRODUCTION OF HTP (HIGH TEST PEROXIDE) HYDROGEN PEROXIDE FOR PROPULSION APPLICATIONS AND SYSTEM FOR PRODUCTION THEREOF**
EINSTUFIGES VERFAHREN ZUR HERSTELLUNG VON HTP (HOCHTESTPEROXID)-WASSERSTOFFPEROXID FÜR ANTRIEBSANWENDUNGEN UND SYSTEM ZUR HERSTELLUNG DAVON
PROCÉDÉ À ÉTAPE UNIQUE POUR LA PRODUCTION DE PEROXYDE D'ESSAI ÉLEVÉE (HLP) À DES FINS DE PROPULSION DE PEROXYDE D'HYDROGÈNE ET SYSTÈME DE PRODUCTION DE CELUI-CI

(30) Priority: 14.07.2015 PL 41309915
(43) Date of publication of application: 18.01.2017
(73) Proprietor: Instytut Lotnictwa, 02-256 Warszawa (PL)
(72) Inventor: RARATA, Grzegorz, 02-811 Warszawa (PL); ROKICKA, Karolina, 02-384 Warszawa (PL); SURMACZ, Pawel, 22-470 Zwierzyniec (PL)
(74) Representative: Sielewiesiuk, Jakub

(56) References cited:
- EP-A1- 2 799 122
- WO-A1-96/39263
- GB-A- 546 530
- GB-A- 590 439
- US-B1- 6 780 288

## Description

The invention relates to a one-stage method for production of HTP (High Test Peroxide) grade hydrogen peroxide for propulsion applications and a system for production thereof. More particularly, the invention relates to a method for concentrating hydrogen peroxide up to 98% and higher concentration, and purifying it to the purity allowing for classifying it as HTP (High Test Peroxide) that can be used as a propellant or a strong oxidizing agent.

Highly concentrated (98% and higher) HTP hydrogen peroxide is a liquid one-component propellant and a strong oxidizing agent used at present mainly in rocket technology.

The most important step in production of a highly concentrated hydrogen peroxide is the method of concentration thereof and the system wherein the process is carried out.

Methods for obtaining hydrogen peroxide of concentration above 90% are known from the state of the art. The oldest one among them is the method based on vacuum distillation of a solution being concentrated. After all, the method was followed by numerous modifications.

Patent publications known in the state of the art and relating to fractional vacuum distillation (concentration) of aqueous solutions of hydrogen peroxide comprise, among others:
1) WO 2012/025333 A1 publication relating to an industrial-scale method for continuous manufacturing of aqueous solutions of hydrogen peroxide of concentration of 50% and 70%, which is essentially different from the present invention,
2) EP1090663 A1 application relating to a technical solution allowing for concentrating aqueous solutions of hydrogen peroxide up to 98%. The process is based on vacuum distillation and evaporation. The distillation is carried out in a special column, and the evaporation is carried out in a detachable evaporator. The distillation column may be a typical packed column, the second component of the device, the evaporator, has, however, special properties, i.e., it is constructed as a vertical tube, inside which the liquid collected at the bottom of the column evaporates flowing down the tube walls as a film. The solution differs from the method, which uses a rotating vessel to evaporate the liquid for purification thereof (rotating evaporator),
3) patent US 6780288 B1 discloses a method that does not comprise the peroxide purification step, which is crucial for obtaining a HTP grade hydrogen peroxide, and
4) US 5296104 A comprising a distillation column and a method for manufacturing pure aqueous solutions of hydrogen peroxide providing concentrated hydrogen peroxide solutions with reduced impurity content.

The most often used variant of the techniques for hydrogen peroxide distillation (concentration) to obtain highly concentrated solutions thereof is a method that makes use of a fractional vacuum distillation performed with a suitable rectifying column (mostly it is a glass column packed, for instance with special rings, often vacuum jacketed, comprising up to a few dozen theoretical plates). A distillation vessel (mostly in a form of a glass flask, of a volume ranging from a fraction of a litre to several dozen of litres) is usually placed in a heating mantle or in another thermoregulated heating device. The distillation vessel comprises often so called necks (for liquid delivery, installation of a thermometer, liquid level sensor or other sensors). Larger distillation vessels often comprise a draining valve in the lower section. Distillation systems additionally comprise systems for monitoring the distillation (concentration) process and various distillation head designs (e.g. featuring thermometer or condenser supplied with cooling water). Relatively larger amounts of hydrogen peroxide are often concentrated using a special two-section fractionating column with the feed between the stripping and the concentrating parts - additionally improving the process efficiency. Such systems are sometimes equipped with more advanced systems monitoring the process of hydrogen peroxide distillation (concentration), based even on the software allowing for optimisation and designing of distillation (concentration) procedures. In addition, pumps compatible with the peroxide, e.g. a feeding pump (feedstock) and a receiving pump (depleted liquid), are used to make the operation easier (especially when large amounts of hydrogen peroxide are used) ("Distillation plant for producing hydrogen peroxide", US 5171407 A).

Most devices operated at present or in the past for concentrating hydrogen peroxide by means of distillation share several common features. First, primarily for safety (but also for efficiency) reasons, the process is conducted under reduced pressure (about a few dozen mbar at the top of the distillation column) and in an apparatus made of materials that are fully compatible with hydrogen peroxide (mostly borosilicate glass). So the risk of explosion of hydrogen peroxide vapours is minimised (the process is operated beyond the explosivity limits of hydrogen peroxide under given temperature and underpressure conditions), and the glass apparatus minimises the risk of emerging an ignition source (e.g. a spark). In addition, the glass apparatus components minimise the amount of trace impurities penetrating into the hydrogen peroxide solution being concentrated, while an appropriate thermal insulation improves process conditions.

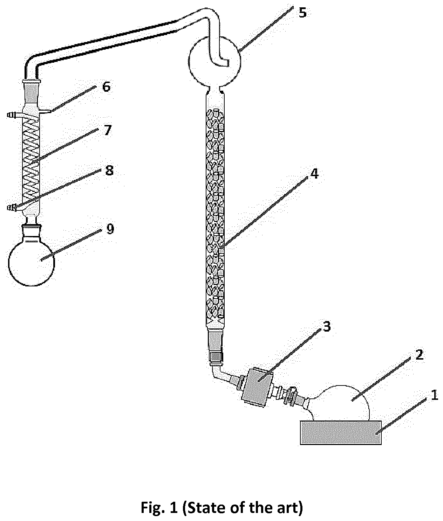

The above mentioned types of equipment have such a disadvantage that their use in the fractional vacuum distillation (concentration) of hydrogen peroxide solutions is limited because of a quite frequent bumping that affects very negatively the concentration process, significantly elongating it in time. For hydrogen peroxide being distilled, this adverse effect appears in a quite a wide temperature range, starting from a temperature close to the boiling point of hydrogen peroxide under given pressure. GB-A-546530 discloses a system and process for concentration and separation of hydrogen peroxide. To address the problem, the Applicant proposed technical solution disclosed in the Polish patent application PL403721 (correspondingly EP 2799122 (application number 14166169.4) that relates to a two-step method for manufacturing hydrogen peroxide, in particular of HTP grade for propulsion applications, and a system for vacuum distillation, focusing primarily on elimination of "bumping" and thereby on a significant acceleration of the vacuum distillation (concentration) process of hydrogen peroxide solution, by using a vacuum distillation system comprising in order: heating means, distillation flask, means for rotating the distillation flask around its axis, rectifying column, drip tube, vacuum pump connection, condenser, cooling water inlet, distillate receiver, whereas the axis of the distillation flask is positioned at an angle from 105° to 140°, with respect to the rectifying column (Fig. 1). Due to this solution, the rate of evaporation and thereby the rate of concentration of hydrogen peroxide could be increased up to the desired level, with no bumping, thereby significantly improving the vacuum distillation process of hydrogen peroxide.

The existing solutions have, however, some drawbacks and/or give rise to technical problems that occur, i.a., in the solutions involving:
- use of two systems, one of which is used for concentrating, and the other one for purification, whereas the use of a one-stage system would be preferred in industrial applications, as it is also related to the achievable appropriate product purity, which depends on how clean is transfer of the semi-fished product between the components of the two-stage system, and to time and space savings,
- lack of an efficiently operated condenser, and therefore incapability to obtain suitable (98%+) concentration of hydrogen peroxide,
- flooding of the vacuum pump with vapours,
- flask removal for product collection after completed process, resulting in weakening and breaking of a connector.

The purpose of the present invention is to eliminate the above mentioned disadvantages and technical problems by conducting the concentration and purification process in a single system (in one-stage mode) that is industrially preferred, as it shortens the process time thereby increasing the process efficiency and the possibility of obtaining a product of unique purity; in addition, using a single system eliminates transfer of the semi-finished product between the devices, which has a critical impact on the purity of the final product. Additionally, according to the invention, due to improved condenser operation appropriate hydrogen peroxide concentrations of 98%+ can be obtained using a condenser controlled by the flow of the cooling liquid over the column, which enables to control the cooling rate, the concentration of the distillate in the receiver, and the process duration.

An electromagnetically controlled system with a reflux valve can also be used, which allows for even more precise control of the distillate concentration in the receiver, and of the process duration.

By using an auxiliary condenser and an auxiliary receiver, the present invention manages to solve the problem of flooding of the vacuum pump with vapours that form water after condensation. Before entering the pump, the vapours are additionally condensed in an auxiliary condenser and as a liquid go to the auxiliary receiver (the problem can be entirely eliminated by using an appropriate (expensive) multi-stage chemically resistant diaphragm pump).

By conducting the process without flask removal due to an automated collection of the product from the flask, the present invention manages also to solve the problem of flask removal for product collection after the process is completed, which results in weakening and breaking of a connector.

According to the present invention, a one-stage system for concentration and purification of concentrated hydrogen peroxide, in particular for production of concentrated solution of HTP (High Test Peroxide) grade hydrogen peroxide of concentration of at least 98%, for propulsion applications, comprising heating means, a water bath, a rotating flask with a drive in a sloping position at an angle from 105° to 140° with respect to the fractionating column, a condenser, a distillate receiver, is characterised in that it additionally comprises a stationary flask placed between the fractionating column and the rotating flask for placing the feedstock, and above the fractionating column and before the condenser it comprises a condenser controlled by the flow rate of the cooling liquid, and further behind the condenser and before the stopcock shutting off the main receiver it comprises an auxiliary condenser that from one side is connected to vacuum, and from the other side it is connected to an auxiliary receiver, whereas the fractionating column is an adiabatic fractionating column, and the final product is received from the rotating flask and the stationary flask.

Preferably, the rotating flask comprises a connection for feedstock delivery and collection of the product.

Preferably, in place of the condenser controlled by the flow rate of the cooling liquid and the auxiliary condenser together with connections for vacuum and auxiliary receiver, the system according to the invention comprises an electromagnetically controlled reflux valve between the fractionating column and the condenser.

Yet more preferably the electromagnetically controlled reflux valve is connected to the auxiliary condenser, before the stopcock of the main receiver.

Preferably, the stationary flask comprises at least one connection for feedstock delivery and/or collection of the product.

Additionally, the invention comprises a method for production of concentrated solution of hydrogen peroxide, in particular of HTP (High Test Peroxide) grade of concentration of at least 98% for propulsion applications, characterized in that in a system according to the invention, the one-stage process of production of concentrated hydrogen peroxide solution is carried out by concentration and purification of hydrogen peroxide solution in one and the same system.

Preferably, in the method according to the invention, an at least 60% hydrogen peroxide solution is used as the feedstock, and most preferably a 60% hydrogen peroxide solution (analytical grade).

Preferably the method according to the invention is implemented under reduced pressure ranging from 3 to 14 ± 2 mbar, more preferably from 3 to 6 ± 2 mbar, and most preferably 3 mbar.

Preferably, in the method according to the invention, the rotating flask is operated with rotational speed from 60 to 70 ± 5 rotations per minute and at water bath temperature from 55°C to 60°C.

Preferably, in the method according to the invention, the temperature of the cooling medium used ranges from 2°C to 5°C.

Now, the invention is explained in detail in preferred embodiments, with reference to the accompanying figures, wherein:
- Fig. 1: shows the state of the art comprising a scheme of a system for vacuum distillation according to the invention (concentration) of the initial hydrogen peroxide solution. The following markings are used in the scheme: 1 - heating water bath with thermostat, 2 - rotating distillation flask with a sensor measuring the concentration of hydrogen peroxide, 3 - electric motor, 4 - Hempel column packed with Raschig rings, 5 - drip tube, 6 - vacuum pump connection, 7 - condenser, 8 - cooling water inlet, 9 - distillate receiver.

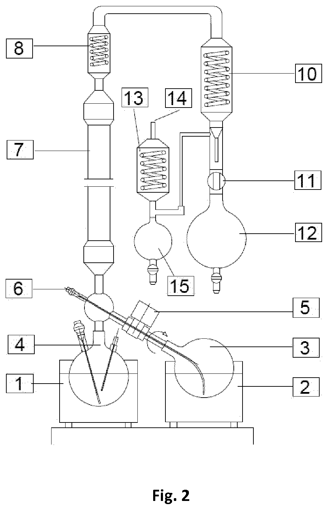

- Fig. 2: shows a scheme of a laboratory apparatus with a condenser controlled by the flow rate of the cooling liquid. The following markings are used in the scheme: 1 - water bath with magnetic stirrer, 2 - water bath, 3 - rotating flask, 4 - stationary flask, 5 - rotating flask drive, 6 - connection for filling the rotating flask and for product collection, 7 - adiabatic fractionating column, 8 - condenser controlled by the flow rate of the cooling liquid, 10 - condenser, 11 - stopcock of the main receiver, 12 - main receiver, 13- auxiliary condenser, 14 - vacuum connection, 15 - auxiliary receiver.

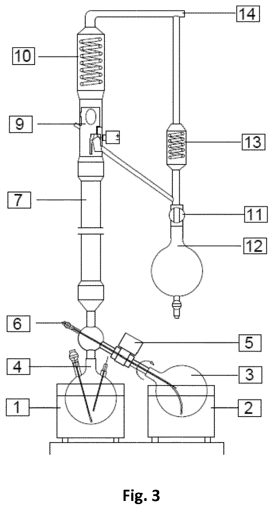

- Fig. 3: shows a scheme of the apparatus with electromagnetically controlled reflux valve. The following markings are used in the scheme: 1 - water bath with magnetic stirrer, 2 - water bath, 3 - rotating flask, 4 - stationary flask, 5 - rotating flask drive, 6 - connection for filling the rotating flask and for product collection, 7 - adiabatic fractionating column, 9 - electromagnetically controlled reflux valve, 10 - condenser, 11 - stopcock of the main receiver, 12 - main receiver, 13-auxiliary condenser, 14 - vacuum connection.

### Embodiments of the invention

According to one variant of the invention, shown in Fig. 2, a one-stage system for concentration and purification of concentrated hydrogen peroxide solution, in particular for a concentration above 98%, comprises a heating medium, a water bath with magnetic stirrer 1 and a water bath 2, a rotating flask 3 in a sloping position at an angle from 105° to 140° with respect to the adiabatic fractionating column 7, and in this position the rotating flask comprises the rotating flask drive 5. Additionally, between the rotating flask 3 and the fractionating column 7 in position of the column 7 there is a stationary flask 4. Between the fractionating column 7 and the condenser 10 there is a condenser controlled by the flow rate of the cooling liquid 8 to control the cooling rate and the distillate concentration in the receiver 12 and the process duration, and behind the condenser 10 and before the stopcock 11 shutting off the main receiver 12 there is connected an auxiliary condenser 13 that from one side is connected to vacuum 14, and from the other side is connected to an auxiliary receiver 15, collecting the vapours condensed in the auxiliary condenser 13, while the main receiver 12 is connected directly behind the stopcock. In addition, the rotating flask 3 comprises a connection 6 for feedstock delivery and collection of the product that is automatically received from flasks 3 and 4. The flask 4 may comprise connections for feedstock delivery and collection of the product (shown in Fig. 2 with no markings).

According to another variant of the invention, shown in Fig. 3, a one-stage system for concentration and purification of concentrated hydrogen peroxide solution differs from the above described variant in that it comprises an electromagnetically controlled reflux valve 9 to control the distillate concentration in the receiver 12, placed between the adiabatic fractionating column 7, and the condenser 10, in place of the condenser 8 and the auxiliary condenser 13 together with connections 14 and 15 shown in Fig. 2. In this variant of the system according to the invention, the electromagnetically controlled reflux valve 9 is connected to the auxiliary condenser 13, before the stopcock 11 shutting off the main receiver.

According to the present invention, concentration and simultaneous purification of hydrogen peroxide solutions (60%, analytical grade) were carried out in a laboratory apparatus shown in Fig. 2. Similar results are obtained using the variant of the apparatus shown in Fig.3, where the electromagnetically controlled reflux valve 9 is placed between the adiabatic fractionating column 7, and the condenser 10, instead of the condenser 8 and the auxiliary condenser 13 together with connections 14 and 15.

A suitable amount of feedstock (60% H₂O₂ solution, analytical grade) is placed in the rotating flask 3. Then the first step of the process is conducted, i.e. the solution is evaporated (and simultaneously purified from volatile impurities) by stimulated evaporation. Peroxide and water vapours migrate in part to the stationary column 4, and in part to the adiabatic fractionating column 7, packed with Raschig rings, where they are separated. As a result, in such a system water is almost completely evaporated as well as the impurities are removed and the fractions flow through the condensers 8 and 10, and subsequently accumulate in the receiver 12. The product, i.e. the pure hydrogen peroxide of concentration 98%+, is collected in flasks 3 and 4.

The pressure in the apparatus is maintained at 3 mbar. The process is a vacuum fractionating distillation. The pressure value is dictated also by safety considerations as it minimises the explosion risk of the hydrogen peroxide vapours. Warming up hydrogen peroxide solutions of concentration exceeding 74% under atmospheric pressure results in formation of a potentially explosive atmosphere with vapour concentration above the lower explosion limit. In addition, reduced pressure results in a better desorption and evaporation of organic impurities, which has an impact on the purity of the obtained product. Finally, reduced pressure results in lowering the boiling point of the hydrogen peroxide being distilled, which in turn has a positive impact on the stability of the product obtained (reduced rate of thermal decomposition).

The process can be conducted under conditions presented in examples 1-5, respectively, which allow for achieving an appropriate efficiency, concentration, purity and stability of the final product, with no risk of vapour explosion.

### Example1

Feedstock volume: 1000 ml, rotational speed of the rotating flask 60 rpm, temperature of the cooling medium 2°C (constant), process duration 7 h.

**Table 1 Process parameters**

| **Preset parameters** | | | | |
|---|---|---|---|---|
| **Time [min]** | **Temperature of the medium in baths under flasks** | | **Flow of the cooling medium through the condenser 8** | **Pressure [mbar]** |
| | **Rotating [°C]** | **Stationary [°C]** | | |
| 0 | 55 | 40 | Flows (ON) | 14 |
| 30 | 55 | 40 | Flows (ON) | 14 |
| 30 | 60 | 45 | Flows (ON) | 14 |
| 30 | 60 | 45 | No flow (OFF) | 14 |
| 30 | 60 | 50 | Flows (ON) | 3 |
| 30 | 60 | 55 | Flows (ON) | 3 |
| 30 | a.a. | a.a. | a.a. | a.a. |

**Table 2 Compilation of obtained results**

| | **Volume [ml]** | **Concentration [%]** | **Impurities [ppm]** |
|---|---|---|---|
| **Product** | 500 | 98.4 | 0.2 |
| **Distillate** | 500 | <0.5 | 25 |

### Example2

Feedstock volume: 1000 ml, rotational speed of the rotating flask 70 rpm, process duration 6 h 35 min, temperature of the cooling medium 2°C (constant).

**Table 3 Process parameters**

| **Preset parameters** | | | | |
|---|---|---|---|---|
| **Time [min]** | **Temperature of the medium in baths under flasks** | | **Flow of the cooling medium through the condenser (8)** | **Pressure [mbar]** |
| | **Rotating [°C]** | **Stationary [°C]** | | |
| 0 | 55 | 40 | Flows (ON) | 6 |
| 30 | 55 | 40 | Flows (ON) | 6 |
| 30 | 60 | 45 | Flows (ON) | 6 |
| 30 | 60 | 45 | No flow (OFF) | 6 |
| 30 | 60 | 50 | Flows (ON) | 3 |
| 30 | 60 | 55 | Flows (ON) | 3 |
| 30 | a.a. | a.a. | a.a. | a.a. |

**Table 4 Compilation of obtained results**

| | **Volume [ml]** | **Concentration [%]** | **Impurities [ppm]** |
|---|---|---|---|
| **Product** | 500 | 98.5 | 0.1 |
| **Distillate** | 500 | <0.5 | 31 |

### Example3

Feedstock volume: 1000 ml, rotational speed of the rotating flask 70 rpm, process duration 6 h, temperature of the cooling medium 2°C (constant).

**Table 5 Process parameters**

| **Preset parameters** | | | | |
|---|---|---|---|---|
| **Time [min]** | **Temperature of the medium in baths under flasks** | | **Flow of the cooling medium through the condenser (8)** | **Pressure [mbar]** |
| | **Rotating [°C]** | **Stationary [°C]** | | |
| 0 | 60 | 45 | Flows (ON) | 6 |
| 30 | 60 | 50 | Flows (ON) | 6 |
| 30 | 60 | 50 | Flows (ON) | 3 |
| 30 | 60 | 55 | No flow (OFF) | 3 |
| 30 | 60 | 55 | Flows (ON) | 3 |
| 30 | a.a. | a.a. | a.a. | a.a. |

**Table 6 Compilation of obtained results**

| | **Volume [ml]** | **Concentration [%]** | **Impurities [ppm]** |
|---|---|---|---|
| **Product** | 500 | 99.0 | 0,2 |
| **Distillate** | 500 | <0.5 | 33 |

### Example4

Feedstock volume: 1400 ml, rotational speed of the rotating flask 70 rpm, process duration 6 h, temperature of the cooling medium 2°C (constant).

**Table 7 Process parameters**

| **Preset parameters** | | | | |
|---|---|---|---|---|
| **Time [min]** | **Temperature of the medium in baths under flasks** | | **Flow of the cooling medium through the condenser (8)** | **Pressure [mbar]** |
| | **Rotating [°C]** | **Stationary [°C]** | | |
| 0 | 60 | 50 | No flow (OFF) | 3 |
| 5 | 60 | 50 | Flows (ON) | 3 |
| 15 | 60 | 55 | No flow (OFF) | 3 |
| 30 | 60 | 55 | No flow (OFF) | 3 |
| 30 | 60 | 55 | No flow (OFF) | 3 |
| 30 | 60 | 58 | Flows (ON) | 3 |
| 30 | a.a. | a.a. | a.a. | a.a. |

**Table 8 Compilation of obtained results**

| | **Volume [ml]** | **Concentration [%]** | **Impurities [ppm]** |
|---|---|---|---|
| **Stationary flask** | 450 | 98.5 | 0.21 |
| **Rotating flask** | 250 | 99.5 | 0.70 |
| **Product** | 700 | 98.8 | 0.42 |
| **Distillate** | 700 | 3.0 | 23 |

### Example 5

Feedstock volume: 1900 ml, rotational speed of the rotating flask 70 rpm, duration 7 h 15 min, temperature of the cooling medium 2°C (constant).

**Table 9 Process parameters**

| **Preset parameters** | | | | |
|---|---|---|---|---|
| **Time [min]** | **Temperature of the medium in baths under flasks** | | **Flow of the cooling medium through the condenser (8)** | **Pressure [mbar]** |
| | **Rotating [°C]** | **Stationary [°C]** | | |
| 0 | 60 | 50 | No flow (OFF) | 3 |
| 5 | 60 | 50 | Flows (ON) | 3 |
| 15 | 60 | 55 | Flows (ON) | 3 |
| 30 | 60 | 55 | No flow (OFF) | 3 |
| 30 | 60 | 55 | No flow (OFF) | 3 |
| 30 | 60 | 55 | No flow (OFF) | 3 |
| 30 | 60 | 58 | Flows (ON) | 3 |
| 30 | a.a. | a.a. | a.a. | a.a. |

**Table 10 Compilation of obtained results**

| | **Volume [ml]** | **Concentration [%]** | **Impurities [ppm]** |
|---|---|---|---|
| **Stationary flask** | 550 | 97.8 | 0.07 |
| **Rotating flask** | 450 | 99.0 | 0.35 |
| **Product** | 1000 | 98.4 | 0.28 |
| **Distillate** | 1000 | 3.0 | 25 |

For comparison, two comparative examples 1 and 2 are presented below, wherein a drip tube was used in place of the condenser 8 showing that there are differences in the way the process is conducted, based on the achieved product (HTP) concentration, efficiency and purity.

### Comparative example 1

Feedstock volume: 500 ml, rotational speed of the rotating flask 60 rpm, temperature of the cooling medium 5°C (constant), process duration 9 h.

| **Preset parameters** | | | | |
|---|---|---|---|---|
| **Time [min]** | **Temperature of the medium in baths under flasks** | | **Flow of the cooling medium through the condenser (8)** | **Pressure [mbar]** |
| | **Rotating [°C]** | **Stationary [°C]** | | |
| 0 | 35 | 25 | No condenser (8), drip tube present | 12 |
| 30 | 37 | 27 | | 10 |
| 30 | 40 | 30 | | 10 |
| 30 | 42 | 30 | | 8 |
| 30 | 45 | 30 | | 6 |
| 30 | 48 | 30 | | 5 |
| 30 | 50 | 30 | | 4 |
| 30 | 50 | 35 | | 4 |
| 60 | 50 | 40 | | 4 |
| 75 | 50 | 42 | | 4 |
| 165 | 55 | 45 | | 4 |
| 30 | a.a. | a.a. | | a.a. |

| | **Volume [ml]** | **Concentration [%]** | **Impurities [ppm]** |
|---|---|---|---|
| **Product** | 200 | 95.5 | <1 |
| **Distillate** | 300 | 36 | 25 |

### Comparative example 2

Feedstock volume: 510 ml, rotational speed of the rotating flask 60 rpm, temperature of the cooling medium 5°C (constant), process duration 9 h 15 min.

| **Preset parameters** | | | | |
|---|---|---|---|---|
| **Time [min]** | **Temperature of the medium in baths under flasks** | | **Flow of the cooling medium through the condenser 8** | **Pressure [mbar]** |
| | **Rotating [°C]** | **Stationary [°C]** | | |
| 0 | 40 | 28 | No condenser (8), no drip tube | 12 |
| 30 | 42 | 30 | | 11 |
| 60 | 45 | 30 | | 10 |
| 60 | 47 | 30 | | 10 |
| 30 | 50 | 30 | | 10 |
| 30 | 50 | 30 | | 9 |
| 60 | 50 | 30 | | 8 |
| 60 | 50 | 30 | | 7 |
| 30 | 50 | 30 | | 6 |
| 30 | 50 | 30 | | 5 |
| 30 | 52 | 30 | | 4 |
| 50 | 52 | 32 | | 4 |
| 60 | 55 | 32 | | 4 |
| 25 | a.a. | a.a. | | a.a. |

Distillate I collected after 210 min

| | **Volume [ml]** | **Concentration [%]** | **Impurities [ppm]** |
|---|---|---|---|
| **Product** | 190 | 88 | <1 |
| **Distillate I (after 210 min)** | 240 | 24 | 21 |
| **Distillate II** | 90 | 72 | 3 |

### Conclusions:

Based on the above examples **Table 11** has been compiled, presenting a summary of the results and indicating the differences in the way the processes were conducted.

**Table 11 Summary of the results from the presented examples**

| | **HTP concentration [%]** | **Distillate concentration [%]** | **HTP purity [ppm]** | **Efficiency [ml/h]** | **Difference** |
|---|---|---|---|---|---|
| **Example 1** | 98.4 | <0.5 | 0.2 | 72.9 | - |
| **Example 2** | 98.5 | <0.5 | 0.1 | 77.5 | Increased rotational speed of the rotating flask |
| **Example 3** | 99.0 | <0.5 | 0.2 | 85.0 | Higher preset temperature |
| **Example 4** | 98.8 | 3 | 0.42 | 116.7 | Higher preset temperature, control of cooling medium flow in condenser 8, the process was conducted until the rate of the distillate formation slowed down |
| **Example 5** | 98.4 | 3 | 0.28 | 137.9 | Increased feedstock volume |

- Significantly better results are obtained according to the present invention, in particular when concentration efficiency, purity are compared with the prior art;
- The apparatus used enabled us to consciously control the parameters while the process was running so as to achieve targeted values of: distillate and HTP concentrations, purity and efficiency;
- Increase in rotational speed of the rotating flask significantly increases the efficiency of concentration process;
- When the process is conducted until the rate of the distillate formation slowed down, and not until the solution is entirely evaporated from the rotating flask, the process duration is shortened, the efficiency increased, and the purity of the final product not significantly affected (the impurity content does not exceed the value permitted for this product purity grade according to MIL-PRF-16005F specification).

## Claims

1. One-stage system for concentration and purification of concentrated hydrogen peroxide, in particular for production of concentrated solution of HTP (High Test Peroxide) grade hydrogen peroxide of concentration of at least 98% for propulsion applications, comprising heating means, a water bath, a rotating flask with a drive in a sloping position at an angle from 105° to 140° with respect to the fractionating column, a condenser, a distillate receiver, **characterised in that** it additionally comprises a stationary flask (4) placed between the fractionating column (7) and the rotating flask (3) for placing the feedstock, and above the fractionating column (7) and before the condenser (10) it comprises a condenser controlled by the flow rate of the cooling liquid (8), and further behind the condenser (10) and before the stopcock (11) shutting off the main receiver (12) it comprises an auxiliary condenser (13) that from one side is connected to vacuum, and from the other side it is connected to an auxiliary receiver (15), whereas the fractionating column is an adiabatic fractionating column (7), and the final product is received from the rotating flask (3) and the stationary flask (4).

2. System according to claim 1, **characterized in that** the rotating flask (3) comprises a connection (6) for feedstock delivery and collection of the product.

3. System according to claim 1 or 2, **characterized in that** in place of the condenser controlled by the flow rate of the cooling liquid (8) and the auxiliary condenser (13) together with connections for vacuum (14) and auxiliary receiver (15) it comprises an electromagnetically controlled reflux valve (9) between the fractionating column (7) and the condenser (10).

4. System according to claim 3, **characterized in that** the electromagnetically controlled reflux valve (9) is connected to the auxiliary condenser (13), before the stopcock of the main receiver (11).

5. System according to any of claims 1 to 4, **characterized in that** the stationary flask (4) comprises at least one connection for feedstock delivery and/or collection of the product.

6. Method for production of concentrated solution of hydrogen peroxide, in particular of HTP (High Test Peroxide) grade of concentration of at least 98% for propulsion applications, **characterized in that** in a system according to claim 1, one-stage process of production of concentrated hydrogen peroxide solution is carried out by concentration and purification of hydrogen peroxide solution in one and the same system.

7. Method according to claim 6, **characterized in that** an at least 60% hydrogen peroxide solution is used as the feedstock, and most preferably a 60% solution of analytical grade hydrogen peroxide.

8. Method according to claim 6 or 7, **characterized in that** it is implemented under reduced pressure ranging from 3 to 14 ± 2 mbar, more preferably from 3 to 6 ± 2 mbar, and most preferably 3 mbar.

9. Method according to claim 6 or 7, or 8, **characterized in that** the rotating flask is operated with rotational speed from 60 to 70 ± 5 rotations/minute and at water bath temperature from 55°C to 60°C.

10. Method according to any of claims 6 to 8. **characterized in that** the temperature of the cooling medium used ranges from 2°C to 5°C.

## Patentansprüche

1. Einstufiges System zur Konzentration und Reinigung von konzentriertem Wasserstoffperoxid, insbesondere zur Herstellung von konzentrierter Lösung von HTP (High Test Peroxid) Grad Wasserstoffperoxid mit einer Konzentration von mindestens 98% für Antriebsanwendungen, bestehend aus Heizmittel, einem Wasserbad, einem Rotationskolben mit einem Antriebe in einer Schrägstellung in einem Winkel von 105° bis 140° hinsichtlich der Fraktionierkolonne, einem Kondensator, einer Destillataufnahme, , **dadurch gekennzeichnet, dass** es zusätzlich einen zwischen der Fraktionierkolonne (7) und dem Rotationskolben (3) angeordneten stationären Kolben (4) zum Anordnen des Rohmaterials und oberhalb der Fraktionierkolonne (7) und vor dem Kondensator (10) ein Kondensator, der durch den Durchfluss der Kühlflüssigkeit (8) gesteuert wird, aufweist und weiter, hinter dem Kondensator (10) und vor dem den Hauptempfänger (12) abschaltenden Absperrhahn (11) einen Hilfskondensator (13) aufweist, der von einer Seite mit Vakuum verbunden ist und von der anderen Seite mit einem Hilfsaufnehmer (15) verbunden ist, während die Fraktionierkolonne eine adiabatische Fraktionierkolonne (7) ist und das Endprodukt aus dem Rotationskolben (3) und dem stationären Kolben (4) erhalten wird.

2. System nach Anspruch 1, **dadurch gekennzeichnet, dass** der Rotationskolben (3) einen Anschluss (6) zum Zuführen des Rohmaterials und Sammeln des Produkts aufweist.

3. System nach Anspruch 1 oder 2, **dadurch gekennzeichnet, dass** anstelle des durch den Durchfluss der Kühlflüssigkeit (8) und des Hilfskondensators (13) gesteuerten Kondensators zusammen mit Anschlüssen für Vakuum (14) und Hilfsempfänger (15) ein elektromagnetisch gesteuertes Rücklaufventil (9) zwischen der Fraktionierkolonne (7) und dem Kondensator (10) aufweist.

4. System nach Anspruch 3, **dadurch gekennzeichnet, dass** das elektromagnetisch gesteuerte Rücklaufventil (9) vor dem Absperrhahn des Hauptempfängers (11) mit dem Hilfskondensator (13) verbunden ist.

5. System nach einem der Ansprüche 1 bis 4, **dadurch gekennzeichnet, dass** der stationäre Kolben (4) mindestens einen Anschluss zum Zuführen des Rohmaterials und/oder Sammeln des Produkts aufweist.

6. Verfahren zur Herstellung einer konzentrierten Lösung von Wasserstoffperoxid, insbesondere von HTP (High Test Peroxid) Grad mit einer Konzentration von mindestens 98% für Antriebsanwendungen, **dadurch gekennzeichnet, dass** in einem System nach Anspruch 1 ein einstufiges Herstellungsverfahren von konzentrierten Wasserstoffperoxidlösung durch Konzentration und Reinigung von Wasserstoffperoxidlösung in einem und demselben System durchgeführt wird.

7. Verfahren nach Anspruch 6, **dadurch gekennzeichnet, dass** als Rohmaterial eine mindestens 60%-ige Wasserstoffperoxidlösung und am meisten bevorzugt eine 60%-ige Wasserstoffperoxidlösung des analytischen Grades verwendet wird.

8. Verfahren nach Anspruch 6 oder 7, **dadurch gekennzeichnet, dass** es unter vermindertem Druck im Bereich von 3 bis 14±2 mbar, besonders bevorzugt von 3 bis 6±2 mBar und am meisten bevorzugt von 3 mbar durchgeführt wird.

9. Verfahren nach Anspruch 6 oder 7 oder 8, **dadurch gekennzeichnet, dass** der Rotationskolben mit einer Drehzahl von 60 bis 70±5 Umdrehungen/Minute und einer Wasserbadtemperatur von 55°C bis 60°C betrieben wird.

10. Verfahren nach einem der Ansprüche 6 bis 8 **dadurch gekennzeichnet, dass** die Temperatur des verwendeten Kühlmediums im Bereich von 2°C bis 5°C liegt.

## Revendications

1. Système à un seul stade pour la concentration et la purification du peroxyde d'hydrogène concentré, en particulier pour la production d'une solution concentrée de peroxyde d'hydrogène de qualité HTP (High Test Peroxide) de concentration d'au moins 98% pour les applications de propulsion, comprenant des moyens de chauffage, un bain d'eau, un flacon rotatif avec un entraînement dans une position inclinée sous un angle de 105° à 140° par rapport à la colonne de fractionnement, un condenseur, un récepteur de distillat, **caractérisé en ce qu'il** comprend en outre un flacon stationnaire (4) placé entre la colonne de fractionnement (7) et le flacon rotatif (3) pour placer la matière première, et au-dessus de la colonne de fractionnement (7) et avant le condenseur (10) il comprend un condensateur commandé par le débit d'écoulement du liquide de refroidissement (8), et plus loin derrière le condenseur (10) et avant que le robinet d'arrêt (11) fermant le récepteur principal (12) il comprend un condenseur auxiliaire (13) qui, d'un côté, est relié au vacuum, et de l'autre côté il est relié à un récepteur auxiliaire (15), tandis que la colonne de fractionnement est une colonne de fractionnement adiabatique (7), et le produit final est reçu à partir du flacon rotatif (3) et du flacon stationnaire (4).

2. Système selon la revendication 1, **caractérisé en ce que** le flacon rotatif (3) comprend une connexion (6) pour la livraison de la matière première et la collecte du produit.

3. Système selon la revendication 1 ou 2, **caractérisé en ce qu'à** la place du condenseur commandé par le débit d'écoulement du liquide de refroidissement (8) et le condenseur auxiliaire (13) avec des connexions pour vacuum (14) et le récepteur auxiliaire (15), il comprend un clapet anti-retour (9) à commande électromagnétique entre la colonne de fractionnement (7) et le condenseur (10).

4. Système selon la revendication 3, **caractérisé en ce que** le clapet anti-retour (9) à commande électromagnétique est relié au condenseur auxiliaire (13), avant que le robinet d'arrêt du récepteur principal (11).

5. Système selon l'une quelconque des revendications 1 à 4, **caractérisé en ce que** le flacon stationnaire (4) comprend au moins une connexion pour la livraison de la matière première et/ou la collecte du produit.

6. Méthode de production d'une solution concentrée de peroxyde d'hydrogène, en particulier de qualité HTP (High Test Peroxide) de concentration d'au moins 98% pour les applications de propulsion, **caractérisée en ce que** dans un système selon la revendication 1, le procédé à un seul stade de production d'une solution concentrée de peroxyde d'hydrogène est réalisé par concentration et purification de la solution de peroxyde d'hydrogène dans un seul et même système.

7. Méthode selon la revendication 6, **caractérisée en ce qu'une** solution de peroxyde d'hydrogène d'au moins 60% est utilisée comme matière première, et le plus préférablement une solution à 60% de peroxyde d'hydrogène de qualité analytique.

8. Méthode selon la revendication 6 ou 7, **caractérisée en ce qu'elle** est mise en oeuvre sous une pression réduite allant de 3 à 14 ± 2 mbar, plus préférablement de 3 à 6 ± 2 mbar, et le plus préférablement de 3 mbar.

9. Méthode selon la revendication 6 ou 7, ou 8, **caractérisée en ce que** le flacon rotatif fonctionne avec une vitesse de rotation de 60 à 70 ± 5 tours/minute et à une température du bain d'eau de 55°C à 60°C.

10. Méthode selon l'une quelconque des revendications 6 à 8, **caractérisée en ce que** la température du milieu de refroidissement utilisé est comprise entre 2°C et 5°C.
